# FASCICULE DE BREVET EUROPEEN

(11) **EP 4 559 854 B1**
(45) Date de publication et mention de la délivrance du brevet: **12.08.2026**
(21) Numéro de dépôt: 24212534.2
(22) Date de dépôt: 12.11.2024
(51) Int. Cl.: B66B 5/02

(54) **DISPOSITIF D'AFFALAGE HYDRAULIQUE À COMMANDE MANUELLE POUR ENGIN DE LEVAGE**
HANDBETÄTIGTE HYDRAULISCHE HUBEINRICHTUNG FÜR HEBEZEUGE
MANUALLY OPERATED HYDRAULIC SHARPENING DEVICE FOR LIFTING EQUIPMENT

(30) Priorité: 24.11.2023 FR 2313005
(43) Date de publication de la demande: 28.05.2025
(73) Titulaire: STROMAG FRANCE SAS, 18150 La Guerche-sur-l'Aubois (FR)
(72) Inventeur: BABISE, David, 58200 POUGNY (FR)
(74) Mandataire: Santarelli

(56) Documents cités:
- AU-A1- 2015 208 223
- US-A- 662 264

## Description

### Domaine technique

La présente demande concerne un dispositif d'affalage hydraulique à commande manuelle pour engin de levage.

### Etat de la technique

Un engin de levage du type grue, pont roulant, etc., comprend usuellement une ligne pourvue d'un tambour autour duquel s'enroulent des câbles de suspension auxquels la charge à lever est accrochée. Un tel engin de levage peut être utilisé pour lever des charges extrêmement lourdes, par exemple pesant plus de 50 tonnes, et dont le poids n'est parfois pas la seule source de danger (la charge peut par exemple être exemple être un matériau radioactif ou un godet rempli de métal en fusion).

L'engin de levage nécessite d'être équipé de freins pour plusieurs fonctions, notamment : ralentir puis arrêter la charge à l'approche d'une position d'arrêt (frein de service) ; bloquer l'engin de levage lorsqu'il est à sa position d'arrêt c'est-à-dire lorsque la charge est à la hauteur souhaitée (frein de parking) ; arrêter et bloquer l'engin de levage en cas de panne électrique ou, de façon plus générale, en cas d'urgence quelle qu'en soit la nature (frein de sécurité, encore appelé frein d'urgence ou « *failsafe brake* » en anglais).

Un frein de sécurité est notamment configuré pour se déclencher lorsqu'il n'est plus alimenté en électricité (en cas de panne électrique) : on parle de frein à manque ou de frein négatif. Les freins à disques se sont imposés depuis les années 1960 pour cet usage notamment car leur échauffement ne pose pas ou peu de problèmes.

Un frein de sécurité à disque comprend généralement :
- un disque solidaire de la ligne à freiner,
- une pince, comportant deux plateaux aptes à venir serrer le disque, lesquels plateaux sont généralement pourvus de plaquettes de friction,
- pour chaque plateau ou pour l'un des deux plateaux seulement, un ressort à rondelles configuré pour imposer un effort de pression sur ledit plateau dans le sens de la fermeture du frein, c'est-à-dire de façon à pousser et maintenir sous pression les plateaux contre le disque et ainsi serrer la pince,
- un actionneur, qui peut être électrohydraulique ou électromagnétique ou encore électromécanique, et qui s'appuie contre une extrémité du ressort à rondelles de façon à comprimer celui-ci dans le sens de l'ouverture du frein ; lorsque l'actionneur est sous-tension, il comprime le ressort à rondelles, ce qui ouvre la pince et libère le disque (et donc la ligne) en rotation.

En cas de panne électrique, l'actionneur devient brutalement inopérant, libérant le ressort à rondelles qui vient fermer le frein. La charge est alors arrêtée et reste suspendue en l'air.

Il convient ensuite de redescendre la charge, et ce alors que l'électricité n'est potentiellement toujours pas rétablie. Cette opération s'effectue à l'aide d'un dispositif d'affalage hydraulique, qui permet de rouvrir légèrement le frein de sécurité et ainsi autoriser la rotation de la ligne et la descente de la charge.

Les freins de sécurité électromagnétiques et électromécaniques sont ainsi équipés d'une chambre hydraulique de déblocage et d'un branchement « de déblocage hydraulique » sur lequel un opérateur peut venir connecter un groupe d'affalage hydraulique lorsqu'une opération d'affalage est nécessaire.

Etant par définition gérés par un système hydraulique, déjà intégré au frein ou non, les freins hydrauliques sont quant à eux comprennent une chambre hydraulique principale pour la gestion courante du frein, et ils sont généralement pourvus d'une « option affalage » qui permet de prendre la main sur le système de gestion hydraulique du frein.

Dans tous les cas, le frein comporte une chambre hydraulique dans laquelle un fluide (par exemple de l'huile) sous pression peut être injecté, laquelle chambre hydraulique s'appuie contre une extrémité du ressort à rondelles du frein de façon à comprimer ledit ressort dans le sens de l'ouverture du frein. Dans toute le suite, cette chambre hydraulique est appelée chambre hydraulique de déblocage du frein, y compris lorsqu'il s'agit d'un frein électrohydraulique et que la chambre en question n'est pas seulement une chambre de déblocage mais est aussi la chambre principale de fonctionnement du frein.

Dans les freins connus (quelle que soit la nature du frein), l'affalage doit être géré par un opérateur depuis le pont de levage ou le sommet de la grue, dans une posture inconfortable et dangereuse car en hauteur.

Dans les freins connus (quelle que soit la nature du frein), le dispositif de déblocage hydraulique intégré au frein ou que l'on vient brancher sur celui-ci lorsqu'une opération d'affalage est nécessaire est équipé d'un réservoir de fluide, d'une pompe à main à levier qui va fournir un volume de fluide suite à une action sur son levier, et d'un limiteur de débit qui va entretenir une fuite contrôlée permanente à destination du réservoir. WO2015/110509 divulgue un tel dispositif de déblocage hydraulique à pompe et manivelle actionnée manuellement.

La combinaison du débit pompe et du débit de fuite génère une contre-pression dans la chambre hydraulique du frein, venant s'opposer à l'effort du ressort à rondelles via le dispositif de déblocage hydraulique.

Quand la contre-pression produit un effort juste supérieur à l'effort de pincement suffisant pour retenir la charge, le glissement commence et la charge descend.

Bien que fonctionnel sur le papier, dans les faits, l'ajustement de la pression dans la chambre hydraulique n'est accessible que par l'adéquation de la fréquence de pompage au débit de fuite.

Dans le but d'équilibrer le volume de fluide injecté dans la chambre hydraulique de déblocage du frein, l'opérateur doit ajuster pendant toute la durée de l'affalage la force et la vitesse de pompage, toutes les deux variables en fonction de la pression attendue, ce qui occasionne stress, fatigue et risque.

Ainsi, les dispositifs d'affalage connus sont très difficiles à manœuvrer et ils ne permettent pas de descendre la charge de façon lente et contrôlée. En effet, ils ne permettent pas à l'opérateur de « sentir » la pression qui règne dans la chambre hydraulique du frein, ni de réguler aisément cette pression. En pratique, le dispositif d'affalage peut finalement réagir en tout ou rien : alors que le frein est encore serré, une seule action supplémentaire sur le levier de la pompe peut entraîner un augmentation rapide et significative de la pression dans la chambre hydraulique de déblocage, qui a pour conséquence l'ouverture du frein et la chute subséquente de la charge.

En outre, non seulement le dispositif est dépourvu de moyens de contrôle de la pression dans la chambre hydraulique de déblocage, mais de plus une fois la pression d'équilibre dépassée, le dispositif d'affalage ne permet pas à l'opérateur d'agir pour diminuer de façon contrôlée la quantité et/ou la pression de fluide dans la chambre hydraulique afin de refermer légèrement le frein de façon à ralentir la chute de la charge.

A noter qu'on entend par « pression d'équilibre » du frein, la pression du fluide dans la chambre hydraulique de déblocage qui permet de comprimer le ressort à rondelles (dans le sens de l'ouverture du frein) mais sans décoller les plaquettes du disque, autrement dit la pression de fluide qui permet à la chambre hydraulique de contrer exactement l'effort exercé par le ressort sur les plateaux de la pince pour retenir la charge. Lorsque cette pression d'équilibre est atteinte dans la chambre hydraulique, la charge n'est plus retenue par le frein bien que celui-ci ne soit pas vraiment ouvert.

Pour que la charge puisse être descendue de façon lente, progressive et contrôlée, la pression dans la chambre doit être à la fois supérieure à cette pression d'équilibre pour que les plateaux du frein n'exercent pas un effort de nature à bloquer le disque, et suffisamment proche de celle-ci pour que les plateaux appuient suffisamment sur le disque pour ralentir la descente de la charge.

### Exposé de l'invention

L'invention vise à pallier au moins l'un des inconvénients précités en proposant un dispositif d'affalage pour engin de levage, qui permette de descendre une charge de façon contrôlée en toute sécurité, et qui soit facile à manoeuvrer et sans danger pour l'opérateur.

A cette fin, l'invention propose un dispositif d'affalage hydraulique pour frein de sécurité d'un engin de levage, destiné à être utilisé avec un frein pourvu d'une chambre hydraulique de déblocage et d'un branchement d'entrée de fluide, dit branchement de déblocage, le dispositif d'affalage comprenant un réservoir de fluide et une prise de sortie de fluide. Le dispositif d'affalage selon l'invention est caractérisé en ce qu'il comprend :
- un accumulateur de fluide sous pression, relié au réservoir de fluide,
- une pompe reliée au réservoir pour injecter sous pression dans l'accumulateur du fluide présent dans le réservoir,
- un régulateur de pression à trois voies comprenant une entrée de commande mécanique pour le réglage d'une valeur de consigne, une entrée de fluide reliée à l'accumulateur, une première sortie de fluide reliée à la prise de sortie de fluide du dispositif d'affalage, et une seconde sortie de fluide, dite drain, reliée au réservoir,
- un organe d'actionnement manuel de l'entrée de commande du régulateur de pression,
- une rallonge pour la liaison fluidique de la prise de sortie de fluide au branchement de déblocage du frein de sécurité.

Le dispositif d'affalage selon l'invention s'utilise comme suit :
- lorsqu'une opération d'affalage est nécessaire, un opérateur vient connecter le dispositif d'affalage sur le branchement de déblocage du frein de sécurité, via la rallonge du dispositif d'affalage,
- dans un premier temps, l'opérateur se concentre sur la création d'une réserve d'énergie ; il actionne la pompe pour la mise sous pression du fluide dans l'accumulateur jusqu'à obtenir une pression dans l'accumulateur correspondant par exemple à la pression maximale autorisée dans la chambre hydraulique du frein ou correspondant de préférence à la pression maximale admissible dans l'accumulateur,
- dans un second temps, l'opérateur se concentre sur le pilotage à proprement parlé ; il fait évoluer à sa guise la pression dans la chambre hydraulique du frein en manipulant l'organe d'actionnement manuel de l'entrée de commande du régulateur de pression à trois voies, afin de maîtriser la descente de la charge.

Ainsi, l'invention repose sur la combinaison de deux principes :
- le découplage entre la mise sous pression du fluide destiné à être injecté dans la chambre hydraulique de déblocage du frein, et l'injection de ce fluide dans ladite chambre, c'est-à-dire le découplage entre l'action physique de pompage (qui demande de la puissance) et l'action d'ajustement de la pression (qui demande de la finesse, de la précision, et de l'attention), ce découplage étant permis grâce à la provision d'un accumulateur dans le dispositif d'affalage ;
- le contrôle de la pression dans la chambre hydraulique du frein, grâce à la provision d'un régulateur de pression à trois voies entre cet accumulateur et la prise de sortie de fluide du dispositif d'affalage ; l'affalage s'effectue donc par régulation d'une pression et non d'un volume ou d'un débit comme c'est le cas des dispositifs d'affalage connus.

De plus, l'utilisation d'un régulateur de pression à trois voies permet de contrôler la pression dans la chambre hydraulique de déblocage du frein dans les deux sens :
- si la valeur de consigne demandée à l'entrée de commande du régulateur est supérieure à la pression de sortie du régulateur, c'est-à-dire à la pression du fluide dans la chambre hydraulique de déblocage du frein, le régulateur de pression met en communication l'entrée de fluide et la sortie de fluide du régulateur, c'est-à-dire respectivement l'accumulateur et le circuit de déblocage du frein ; le fluide circule en direction du frein et la pression dans la chambre hydraulique de déblocage augmente ce qui permet d'affaiblir le frein ;
- si la valeur de consigne est inférieure à la pression du fluide dans la chambre hydraulique de déblocage du frein, le régulateur met en communication la sortie de fluide du régulateur et le drain, c'est-à-dire respectivement le frein et le réservoir ; le fluide circule en direction du réservoir depuis la chambre hydraulique de déblocage, ce qui permet de renforcer le frein,
- si la valeur de consigne est égale à la pression du fluide dans la chambre hydraulique de déblocage du frein, le régulateur de pression obture les trois voies, cela correspond à une phase d'affalage stable où l'effort de freinage est légèrement inférieur l'effort dû à la charge.

Par ailleurs, une fois la rallonge connectée au frein, le dispositif d'affalage peut être utilisé depuis le sol, l'opérateur pouvant s'installer dans une posture stable et confortable, ce qui n'est pas anodin compte tenu du fait qu'une opération d'affalage peut prendre plusieurs heures selon la charge concernée.

En outre, le dispositif selon l'invention présente l'avantage d'être compatible avec la grande majorité des freins de sécurité connus, en particulier avec tous les freins de sécurité à actionneur hydraulique et avec tous les freins de sécurité électromagnétiques ou électromécaniques munis d'une option de déblocage hydraulique.

Selon des modes de réalisation particuliers de l'invention, le dispositif d'affalage répond en outre aux caractéristiques suivantes, mises en œuvre individuellement ou selon toute combinaison techniquement possible et opérante.

Dans certains modes de réalisation, le dispositif d'affalage comprend un dispositif d'arrêt de sécurité, dit dispositif de sécurité homme mort, comprenant une manette de sécurité configurée pour pouvoir être déplacée par un opérateur entre une position passive de verrouillage qui interdit l'injection de fluide dans la chambre hydraulique de déblocage du frein et une position active de déverrouillage qui autorise l'injection du fluide dans la chambre hydraulique de déblocage du frein, la manette de sécurité étant automatiquement rappelée dans sa position passive de verrouillage en l'absence d'action de l'opérateur.

Le dispositif de sécurité homme mort garantit un affalage totalement sécurisé. A tout moment, la charge peut en effet être instantanément stoppée en lâchant la manette de sécurité.

Dans certains modes de réalisation, le dispositif d'affalage comprend de plus :
- un premier capteur de pression pour mesurer la pression du fluide en entrée du régulateur de pression à trois voies et un premier moyen d'affichage associé audit premier capteur pour l'affichage de la pression mesurée,
- un second capteur de pression pour mesurer la pression du fluide au niveau de la prise de sortie de fluide du dispositif d'affalage ou en sortie du régulateur de pression, et un second moyen d'affichage associé audit second capteur pour l'affichage de la pression mesurée.

Le premier capteur de pression et le premier moyen d'affichage associé (audit premier capteur) sont par exemple un premier un manomètre apte à mesurer des pressions jusqu'à 250bar, et le second capteur de pression et le second moyen d'affichage (associé audit second capteur) sont par exemple un second manomètre apte à mesurer des pressions jusqu'à 150bar.

Ces capteurs de pression et moyens d'affichage associés permettent de connaître et contrôler d'une part la pression disponible dans l'accumulateur, qui correspond à la pression en entrée du régulateur de pression, et d'autre part la pression régnant dans la chambre hydraulique de déblocage du frein, qui correspond à la pression du fluide au niveau de la prise de sortie de fluide du dispositif et qui correspond aussi de préférence à la pression en sortie du régulateur de pression. L'utilité de ces capteurs de pression et moyens d'affichage associés sera mieux comprise à la lecture de la description détaillée plus loin.

Dans certains modes de réalisation, le dispositif d'affalage comprend, en parallèle du régulateur de pression, un circuit de retour de fluide entre la prise de sortie de fluide et le réservoir, permettant la vidange de la chambre de déblocage du frein dans le réservoir. Comme on le comprendra plus loin, ce circuit de retour participe également à la sécurité du dispositif d'affalage et du frein, en combinaison, respectivement, avec le dispositif de sécurité homme mort et avec un limiteur de pression (décrit plus loin).

Dans certains modes de réalisation, le dispositif d'affalage comprend un chariot mobile sur lequel sont montés tous les composants du dispositif. Ce chariot mobile contribue à l'ergonomie du dispositif selon l'invention, en ce qu'il permet à l'opérateur de s'installer facilement à l'endroit le plus approprié pour contrôler l'affalage.

Dans certains modes de réalisation, la pompe peut être : une pompe à main, par exemple une pompe à piston activée manuellement par un levier ; une pompe motorisée, par exemple une pompe rotative à engrenage associée à une visseuse, la pompe comprenant un engrenage pourvu d'une empreinte de réception d'un embout de vissage de la visseuse aux fins d'entraînement en rotation dudit engrenage par ladite visseuse. La visseuse est pourvue d'une batterie afin de pouvoir être alimentée en électricité en toute circonstance (notamment en cas de panne électrique).

Le dispositif peut comprendre plusieurs pompes reliées chacune au réservoir, dont, par exemple, une pompe à main et une pompe motorisée.

Dans certains modes de réalisation, le dispositif d'affalage comprend :
- un bloc foré principal sur lequel sont branchés le réservoir, la pompe, et un flexible de mise sous pression reliant l'accumulateur audit bloc foré principal, et
- un bloc foré secondaire sur lequel sont branchés le régulateur de pression, un flexible d'alimentation relié à l'accumulateur par l'intermédiaire du bloc foré principal, un flexible de retour relié au réservoir par l'intermédiaire du bloc foré principal, et la prise de sortie de fluide du dispositif d'affalage, de même que les premier et second capteurs de pression lorsqu'ils sont présents.

Dans certains modes de réalisation, le dispositif d'affalage comprend un limiteur de pression entre l'accumulateur et le réservoir, configuré pour limiter la pression de fluide injectée dans l'accumulateur.

Dans certains modes de réalisation, le circuit de retour (entre la prise de sortie de fluide et le réservoir) comprend un autre limiteur de pression configuré pour limiter la pression de fluide qui est injectée via la prise de sortie de fluide dans la chambre hydraulique de déblocage du frein.

Dans certains modes de réalisation, lequel le dispositif homme mort comprend :
- une première électrovanne sur le circuit de retour, laquelle première électrovanne est configurée pour être ouverte lorsque la manette de sécurité est en position passive de verrouillage et pour être fermée lorsque la manette de sécurité est en position active de déverrouillage, et
- une seconde électrovanne en entrée du régulateur de pression, laquelle seconde électrovanne est configurée pour être fermée lorsque la manette de sécurité est en position passive de verrouillage et pour être ouverte lorsque la manette de sécurité est en position active de déverrouillage.

L'invention s'étend à un procédé d'affalage d'une charge sur un engin de levage, caractérisé en ce qu'il utilise un dispositif d'affalage tel que précédemment défini, et en ce qu'il comprend :
- une étape de mise sous pression de l'accumulateur durant laquelle au moins une partie du fluide présent dans le réservoir est injectée dans l'accumulateur par activation de la pompe ;
- une étape de pilotage de la pression en sortie du régulateur de pression à l'aide de l'organe d'actionnement manuel de l'entrée de commande du régulateur de pression de façon à contrôler l'affalage d'une charge portée par l'engin de levage,
- les étapes de mise sous pression et de pilotage étant exécutées successivement, indépendamment l'une de l'autre.

De préférence, la mise sous pression de l'accumulateur est effectuée jusqu'à obtention, dans l'accumulateur, de la pression maximale que peut supporter ledit accumulateur. Au cours de l'affalage, si nécessaire, c'est-à-dire si la pression en entrée du régulateur de pression devient insuffisante, l'opérateur peut stopper la descente de la charge en imposant une valeur de consigne au régulateur suffisamment faible pour que le frein soit serré, cesser son pilotage pour mettre de nouveau sous pression l'accumulateur à l'aide de la pompe, puis reprendre enfin son pilotage une fois l'accumulateur ainsi « regonflé ». De préférence, l'opérateur regonfle l'accumulateur jusqu'à obtention, en entrée du régulateur, de la valeur maximale admissible par l'accumulateur, ce afin d'éviter d'avoir à regonfler souvent l'accumulateur.

### Brève description des dessins

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig. 1] la figure 1 est une vue en perspective d'un premier exemple de réalisation de dispositif d'affalage hydraulique selon l'invention ;
[Fig. 2] la figure 2 représente l'exemple de réalisation de la Fig. 1, vu en perspective depuis un point de vue opposé ;
[Fig. 3] la figure 3 est une vue en perspective d'une partie d'un deuxième exemple de réalisation de dispositif d'affalage hydraulique selon l'invention ;
[Fig. 4] la figure 4 est une vue en perspective éclatée d'un troisième exemple de réalisation d'un dispositif selon l'invention ;
[Fig. 5] la figure 5 est un schéma hydraulique de l'exemple de réalisation de la Fig. 4.

### Description détaillée

Les éléments identiques représentés sur les figures précitées sont identifiés par des références numériques identiques.

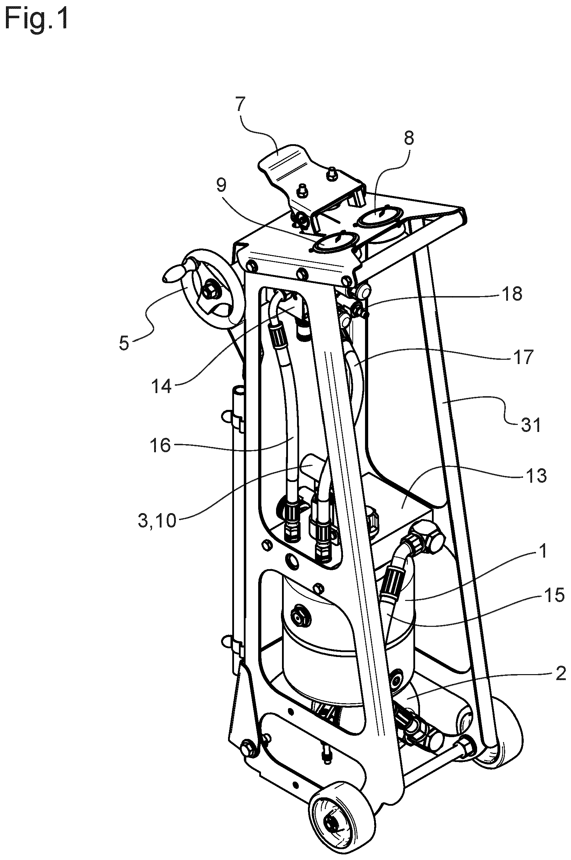

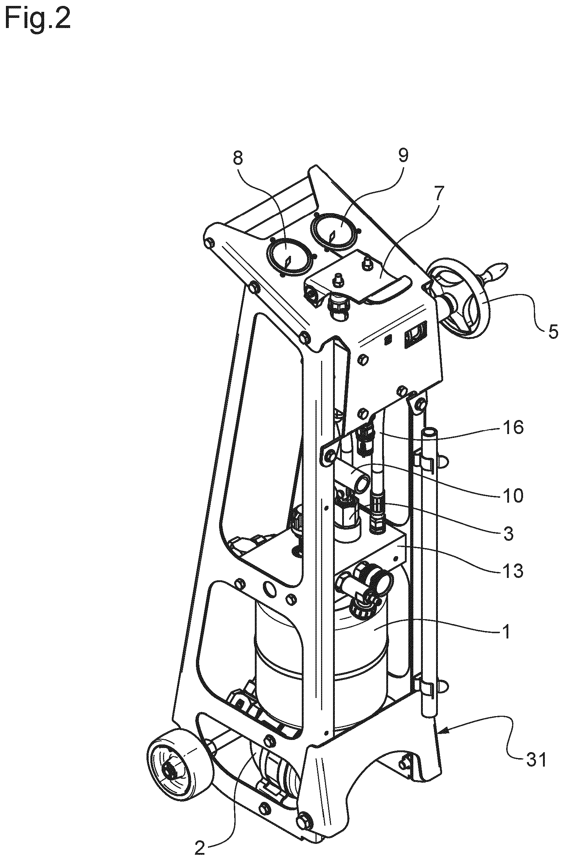

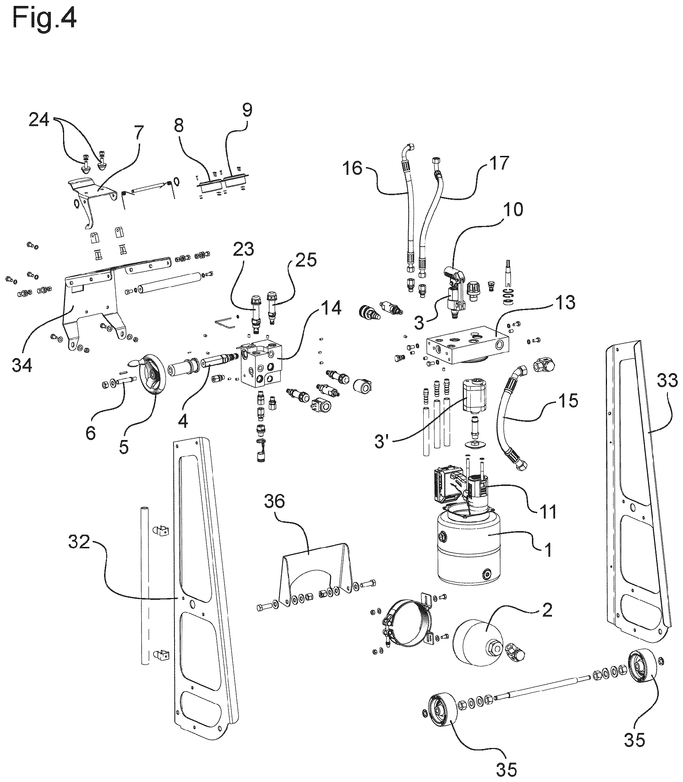

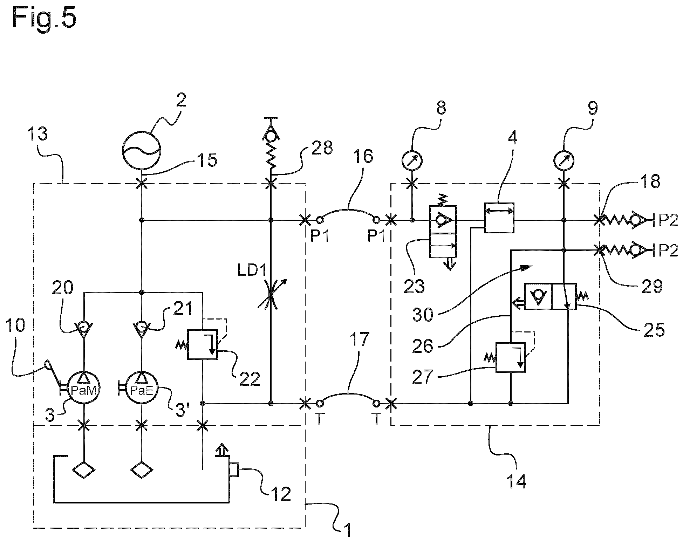

Les Fig. 1 et 2 représentent un premier exemple de réalisation de dispositif d'affalage selon l'invention. Il est également fait référence aux figures 4 et 5 pour les parties communes entre ce premier exemple de réalisation et le troisième exemple de réalisation qui est représenté sur ces Fig. 4 et 5.

Le dispositif d'affalage selon l'invention des Fig. 1 et 2 comprend :
- un réservoir 1 contenant un fluide tel que de l'huile,
- un accumulateur 2 pouvant supporter une pression de 200bar par exemple,
- une pompe à piston 3 pouvant être manuellement actionnée par un levier 10,
- un bloc foré principal 13 et un bloc foré secondaire 14 qui facilitent le branchement hydraulique de certains des éléments du dispositif d'affalage entre eux (voir plus loin),
- un régulateur de pression à trois voies (voir Fig. 4 et 5), plus simplement aussi appelé régulateur de pression -voire même régulateur- dans toute de la description,
- un volant 5 pour le pilotage de la pression en sortie du régulateur de pression, qui correspond à la pression de la chambre hydraulique du frein, l'axe 6 dudit volant (voir Fig. 4) étant emboîté dans l'entrée de commande du régulateur de pression.
- un dispositif de sécurité homme mort comprenant notamment une manette de sécurité 7,
- un manomètre à collier 8 pour la mesure et l'affichage de la pression en entrée du régulateur de pression 4,
- un manomètre à collier 9 pour la mesure et l'affichage de la pression en sortie du régulateur 4,
- une prise de sortie de fluide 18 sur laquelle l'opérateur vient brancher l'extrémité d'un tuyau (non représenté), qualifié de rallonge, l'extrémité opposée de ladite rallonge étant connectée à un branchement d'entrée de fluide du frein de sécurité,
- un circuit de retour de fluide 30 (voir Fig. 5) qui relie la prise de sortie de fluide 18 au réservoir 1.

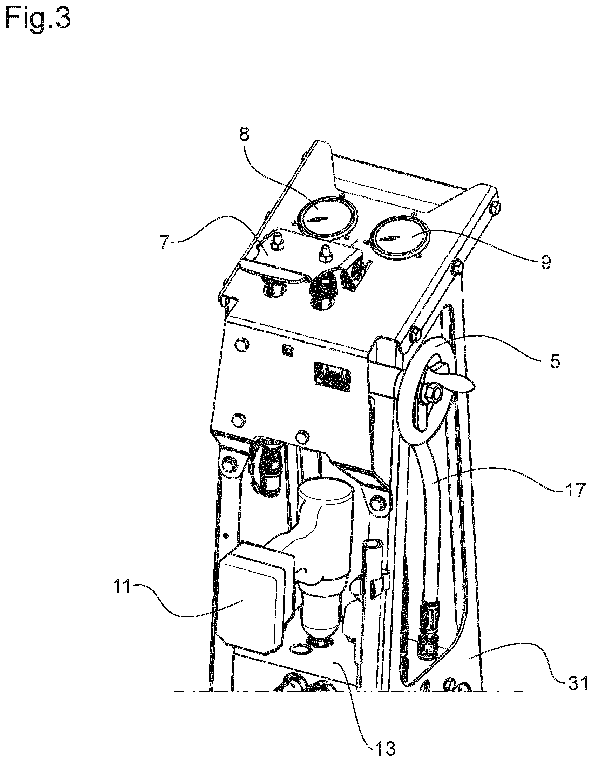

Le deuxième exemple de réalisation illustré sur la Fig. 3 diffère du premier exemple en ce que sa pompe est une pompe immergée motorisée 3' (voir Fig. 4) comprenant un engrenage entraîné par une visseuse 11.

Le troisième exemple illustré sur la Fig. 4 diffère des deux exemples précédents en ce qu'il comprend deux pompes, dont une pompe immergée 3' entraînée par une visseuse 11, similaire à la pompe du deuxième exemple, et une pompe à main 3 actionnée par un levier 10, similaire à celle du premier exemple de réalisation.

Il est maintenant fait référence au schéma hydraulique de la Fig. 5 qui est valable pour les trois exemples de réalisation proposés, à l'exception de la présence de deux pompes qui ne concerne que le troisième exemple.

Les ensembles délimités par des traits pointillés représentent respectivement le réservoir 1, le bloc foré principal 13 et le bloc foré secondaire 14.

Les pompes 3 et 3' sont reliées d'une part au réservoir 1 et d'autre part au bloc foré principal 13 ; elles permettent d'injecter dans l'accumulateur 2 le fluide présent dans le réservoir 1 via le bloc foré principal 13, auquel l'accumulateur 2 est relié par un premier flexible 15, dit flexible de mise sous pression, et via des clapets anti-retour 20 (pour la pompe à main 3) et 21 (pour la pompe à engrenage 3').

Un limiteur de pression 22, également monté sur le bloc foré principal 13, empêche de gonfler l'accumulateur au-delà de sa pression maximale admissible en renvoyant le fluide pompé vers le réservoir 1 lorsque cette pression est atteinte.

Par ailleurs, de façon usuelle, le réservoir 1 est équipé d'un détecteur de niveau 12.

Un deuxième flexible 16, dit flexible d'alimentation, s'étendant entre le bloc foré principal 13 et le bloc foré secondaire 14 permet de relier l'accumulateur 2 à l'entrée de fluide du régulateur de pression 4.

Le manomètre à collier 8 mesure et affiche la pression P1, qui correspond à la fois à la pression du fluide dans l'accumulateur 2 et à la pression de fluide à l'entrée du régulateur de pression 4. Le manomètre à collier 9 mesure et affiche la pression P2, qui correspond à la fois à la pression à la sortie du régulateur de pression 4, à la pression à la prise de sortie de fluide 18 du dispositif d'affalage et à la pression dans la chambre hydraulique de déblocage du frein.

Lorsque l'opérateur augmente, grâce au volant 5, la pression de consigne à l'entrée de commande du régulateur de pression, la pression P2 en sortie du régulateur augmente d'autant et le fluide est injecté dans la chambre hydraulique de déblocage du frein via la rallonge.

Lorsque l'opérateur actionne le volant 5 de façon à diminuer la pression de consigne, la pression de sortie P2 diminue et le fluide circule dans l'autre sens, du frein vers le dispositif d'affalage. Le fluide est alors renvoyé dans le réservoir 1 via le circuit de retour 30, et en particulier via un conduit 26, ménagé dans le bloc foré secondaire 14, puis via un troisième flexible 17, dit flexible de retour, s'étendant entre le bloc foré secondaire 14 et le bloc foré principal 13.

De façon optionnelle mais avantageuse, un limiteur de pression 27 est prévu sur le conduit de retour 26 afin de sécuriser le frein. Si par maladresse ou par erreur, l'opérateur impose, à l'entrée de commande du régulateur de pression 4, une consigne de pression qui dépasse la pression supportée par la chambre hydraulique de déblocage du frein, le limiteur de pression 27 s'ouvre et une partie du fluide est dirigé vers le réservoir au lieu d'être envoyé dans le frein.

La présence de ce limiteur de pression 27 permet d'utiliser sans risque le dispositif d'affalage pour tout type de frein, non seulement pour des freins dont la chambre hydraulique de déblocage peut supporter jusqu'à 180bar (tel qu'un frein de sécurité destiné à un engin de levage pouvant porter plusieurs dizaines, voire centaines, de tonnes), mais aussi pour des freins de moindre puissance dont la chambre hydraulique de déblocage est limitée à 20bar par exemple. En l'absence d'un tel limiteur de pression 27, une façon de réduire les risques d'endommagement du frein est de limiter la pression P1 à laquelle est préalablement gonflé l'accumulateur, en arrêtant l'étape de mise sous pression de l'accumulateur lorsque la pression P1 s'approche de la pression maximale supportée par la chambre hydraulique de déblocage du frein (qui est une spécification technique connue du frein).

Le dispositif homme mort comprend une électrovanne de sécurité 25 sur le circuit de retour de fluide 30. L'électrovanne 25 est actionnée par une butée progressive 24 (voir Fig. 4) enfoncée par la manette de sécurité 7. Lorsque l'opérateur appuie sur la manette de sécurité 7, l'électrovanne de sécurité 25 est fermée et la pression en sortie du régulateur 4 est envoyée dans le frein, ou éventuellement dans le conduit de retour 26 en cas de dépassement de la pression maximale supportée par le frein.

Le relâchement de la manette de sécurité 7 entraîne le retour de la butée progressive 24, l'ouverture de l'électrovanne 25 et la vidange vers le réservoir 1 du circuit en sortie du régulateur de pression (y compris de la chambre hydraulique de déblocage du frein), ce qui provoque la fermeture immédiate du frein.

En complément de l'électrovanne 25, une seconde électrovanne 23 peut être prévue dans le bloc foré secondaire 14 à l'entrée du régulateur de pression 4. Cette seconde électrovanne 23 est actionnée, dans le sens de la fermeture, par une seconde butée progressive 24 qui est enfoncée lorsque l'opérateur appuie sur la manette de sécurité 7.

Le relâchement de la manette de sécurité 7 entraîne donc dans ce cas, non seulement l'ouverture de l'électrovanne 25, mais aussi la fermeture de l'électrovanne 23, ce qui a pour conséquent d'isoler l'accumulateur 2 du reste du circuit. L'électrovanne 23 est optionnelle, elle vient en complément de l'électrovanne 25 pour garantir une fermeture très rapide du frein, en évitant de vider et remplir en même temps la chambre hydraulique de déblocage du frein. L'électrovanne 23 permet ainsi de gagner en temps de retombée du frein.

Le dispositif de sécurité homme mort illustré (avec sa manette 7, ses deux électrovannes et ses deux butées progressives) n'est bien entendu décrit qu'à titre d'exemple non limitatif. L'homme du métier est à même de concevoir, de façon générale, un dispositif de sécurité homme mort à l'aide de ses connaissances générales. On pourrait par exemple prévoir, en variante, un dispositif de sécurité piloté provenant d'une détection client type survitesse, surchauffe, horloge... Cette variante est moins intéressante en ce qu'elle oblige à doter le dispositif d'une batterie pour alimenter électriquement les moyens de détection en cas de panne électrique.

Dans l'exemple illustré à la fig. 5, un limiteur de débit 37 est de plus prévu entre l'accumulateur et le réservoir. Ce limiteur est utilisé en ON/OFF comme un robinet, afin de permettre la vidange (en position ON) de l'accumulateur 2 vers le réservoir 1 pour la mise au repos du dispositif d'affalage.

Dans le cadre du procédé d'affalage selon l'invention, l'opérateur constitue tout d'abord une réserve d'énergie en gonflant au maximum l'accumulateur à l'aide de la pompe 3 ou de la pompe 3'. Il pourra renouveler cette opération autant de fois que nécessaire au cours de l'affalage, en prenant soin tout d'abord de bloquer la charge en réduisant la valeur de consigne à l'entrée de commande du régulateur de pression.

Il actionne ensuite le volant 5 de façon à augmenter la pression dans le frein, et ce plus ou moins rapidement, jusqu'à ce que la charge soit libérée. Ceci signifie qu'il a dépassé la pression d'équilibre dans le frein. Cette pression d'équilibre dépend non seulement du frein mais aussi et surtout de la charge (ce n'est pas une spécification technique du frein seul) ; elle est donc inconnue de l'opérateur au début de l'affalage.

Le manomètre 9 permet à l'opérateur de prendre connaissance de la valeur de cette pression d'équilibre au moment où la charge se met à descendre brutalement. Il actionne alors brutalement le volant dans l'autre sens pour refermer le frein et stopper la charge. Maintenant qu'il connaît approximativement la pression d'équilibre, l'opérateur peut manier avec plus de précision le volant de façon à revenir rapidement à proximité de cette pression puis à progressivement la dépasser pour faire glisser la charge. Il contrôle ensuite facilement la vitesse d'affalage de la charge en pilotant avec précision le régulateur de pression 4 autour de la pression d'équilibre.

Cela étant, un dispositif d'affalage dépourvu de manomètre 9 est conforme à l'invention. L'opérateur doit alors piloter le régulateur à l'aveugle, sans jamais connaître la valeur de la pression d'équilibre. Sans être indispensable, le manomètre 9 contribue à réduire le stress de l'opérateur.

Le manomètre 8 permet à l'opérateur de connaître l'état de la réserve d'énergie dont il dispose dans l'accumulateur 2. Cela lui permet d'anticiper un éventuel manque de pression et la nécessité de regonfler l'accumulateur. Le manomètre 8 est un élément optionnel du dispositif d'affalage selon l'invention, cet élément n'étant pas indispensable à la sécurité de l'opérateur ou à la réussite de l'affalage (un manque de pression en entrée du régulateur ayant pour conséquence la fermeture du frein et l'arrêt de la charge). Tout comme le manomètre 9, le manomètre 8 participe à l'ergonomie du dispositif d'affalage et contribue à réduire le stress de l'opérateur.

Outre les manomètres 8 et 9, le dispositif d'affalage illustré sur la Fig. 5 comprend deux autres prises de pression, à savoir :
- un capteur de pression 28 au niveau du bloc foré principal 13 configuré pour mesurer la pression P1 ; ce capteur 28 indique théoriquement la même mesure que le manomètre 8, c'est-à-dire la pression P1 délivrée par l'accumulateur,
- un capteur de pression 29 sur le circuit de retour entre la prise de sortie de fluide 18 et le limiteur de pression 27 ; ce capteur 29 indique théoriquement la même pression que le manomètre 9, c'est-à-dire la pression délivrée par le régulateur de pression 4 qui correspond aussi à la pression dans la chambre hydraulique de déblocage du frein.

Ces capteurs additionnels peuvent être reliés à un dispositif d'enregistrement ou à un dispositif de contrôle distant, pour une analyse rétrospective ou à distance de l'opération d'affalage.

Le dispositif d'affalage selon l'invention comprend enfin préférentiellement un chariot roulant 31 qui, dans les exemples illustrés, comporte, entre autres, des roues 35, deux flancs 32, 33 reliés notamment par une platine inférieure 36 et par une platine supérieure 34 sur laquelle sont montés les manomètres à collier 8 et 9 et la manette de sécurité 7.

## Revendications

1. Dispositif d'affalage hydraulique pour frein de sécurité d'un engin de levage, destiné à être utilisé avec un frein pourvu d'une chambre hydraulique de déblocage et d'un branchement d'entrée de fluide, dit branchement de déblocage, le dispositif d'affalage comprenant :
- un réservoir de fluide (1), et
- une prise de sortie de fluide (18),
**caractérisé en ce qu'**il comprend :
- un accumulateur (2) de fluide sous pression, relié au réservoir de fluide (1),
- une pompe (3, 3') reliée au réservoir pour injecter sous pression dans l'accumulateur du fluide présent dans le réservoir,
- un régulateur de pression à trois voies (4) comprenant une entrée de commande mécanique pour le réglage d'une valeur de consigne, une entrée de fluide reliée à l'accumulateur (2), une première sortie de fluide reliée à la prise de sortie de fluide (18) du dispositif d'affalage, et une seconde sortie de fluide, dite drain, reliée au réservoir (1),
- un organe (5) pour l'actionnement manuel par un opérateur de l'entrée de commande mécanique du régulateur de pression (4),
- une rallonge pour la liaison fluidique de la prise de sortie de fluide (18) au branchement de déblocage du frein de sécurité.

2. Dispositif d'affalage selon la revendication 1, comprenant un dispositif d'arrêt de sécurité, dit dispositif de sécurité homme mort, comprenant une manette de sécurité (7) configurée pour pouvoir être déplacée par un opérateur entre une position passive de verrouillage qui interdit l'injection de fluide dans la chambre hydraulique de déblocage du frein et une position active de déverrouillage qui autorise l'injection du fluide dans la chambre hydraulique de déblocage du frein, la manette de sécurité (7) étant automatiquement rappelée dans sa position passive de verrouillage en l'absence d'action de l'opérateur.

3. Dispositif d'affalage selon l'une des revendications 1 ou 2, comprenant :
- un premier capteur de pression (8) pour mesurer la pression du fluide en entrée du régulateur de pression (4) et un premier moyen d'affichage (8) associé audit premier capteur pour l'affichage de la pression mesurée,
- un second capteur de pression (9) pour mesurer la pression du fluide au niveau de la prise de sortie de fluide du dispositif d'affalage ou en sortie du régulateur de pression et un second moyen d'affichage (9) associé audit second capteur pour l'affichage de la pression mesurée.

4. Dispositif d'affalage selon la revendication 3, dans lequel le premier capteur de pression et le premier moyen d'affichage sont un premier manomètre (8) apte à mesurer des pressions jusqu'à 250bar, et le second capteur de pression et le second moyen d'affichage sont un second manomètre (9) apte à mesurer des pressions jusqu'à 150bar.

5. Dispositif d'affalage selon l'une des revendications 1 à 4, comprenant un circuit de retour de fluide (30) entre la prise de sortie de fluide (18) et le réservoir (1) en parallèle du régulateur de pression (4).

6. Dispositif d'affalage selon l'une des revendications 1 à 5, comprenant un chariot mobile (31) sur lequel sont montés tous les composants du dispositif d'affalage.

7. Dispositif d'affalage selon l'une des revendications 1 à 6, la pompe est choisie parmi : une pompe à piston (3) activée manuellement par un levier (10), une pompe rotative à engrenage (3') associée à une visseuse (11).

8. Dispositif d'affalage selon l'une des revendications 1 à 7, comprenant :
- un bloc foré principal (13) sur lequel sont branchés le réservoir (1), la pompe (3), un flexible de mise sous pression (15) reliant l'accumulateur (2) audit bloc foré principal, et
- un bloc foré secondaire (14) sur lequel sont branchés le régulateur de pression (4), un flexible d'alimentation (16) relié à l'accumulateur par l'intermédiaire du bloc foré principal (13), un flexible de retour (17) relié au réservoir (1) par l'intermédiaire du bloc foré principal (13), et la prise de sortie de fluide (18) du dispositif d'affalage.

9. Dispositif d'affalage selon l'une des revendications 1 à 8, comprenant un limiteur de pression (22) entre l'accumulateur (2) et le réservoir (1), configuré pour limiter la pression de fluide injectée dans l'accumulateur.

10. Dispositif d'affalage selon la revendication 5, dans lequel le circuit de retour (30) comprend un autre limiteur de pression (27) configuré pour limiter la pression de fluide injectée dans la chambre hydraulique de déblocage du frein via la prise de sortie de fluide (18).

11. Dispositif d'affalage selon l'une des revendications 1 à 10, dans lequel le dispositif homme mort comprend :
- une première électrovanne (25) sur le circuit de retour (30), laquelle première électrovanne est configurée pour être ouverte lorsque la manette de sécurité (7) est en position passive de verrouillage et pour être fermée lorsque la manette de sécurité est en position active de déverrouillage, et
- une seconde électrovanne (23) en entrée du régulateur de pression (4), laquelle seconde électrovanne est configurée pour être fermée lorsque la manette de sécurité (7) est en position passive de verrouillage et pour être ouverte lorsque la manette de sécurité est en position active de déverrouillage.

12. Procédé d'affalage d'une charge sur un engin de levage, **caractérisé en ce qu'**il utilise un dispositif d'affalage selon l'une des revendications précédentes, et **en ce qu'**il comprend :
- une étape de mise sous pression de l'accumulateur (2) durant laquelle au moins une partie du fluide présent dans le réservoir (1) est injectée dans l'accumulateur (2) par activation de la pompe (3, 3'),
- une étape de pilotage de la pression en sortie du régulateur de pression (4) à l'aide de l'organe (5) d'actionnement manuel de l'entrée de commande du régulateur de pression de façon à contrôler l'affalage d'une charge portée par l'engin de levage,
- les étapes de mise sous pression et de pilotage étant exécutées successivement, indépendamment l'une de l'autre.

## Patentansprüche

1. Hydraulische Absenkvorrichtung für eine Sicherheitsbremse eines Hebezeugs, die zur Verwendung mit einer Bremse bestimmt ist, die mit einer hydraulischen Lösekammer und einem Fluideingangsanschluss, den sogenannten Löseanschluss, versehen ist, wobei die Absenkvorrichtung Folgendes umfasst:
- einen Fluidbehälter (1), und
- einen Fluidausgangsanschluss (18),
**dadurch gekennzeichnet, dass** es Folgendes umfasst:
- einen Druckfluidspeicher (2), der mit dem Fluidbehälter (1) verbunden ist,
- eine Pumpe (3, 3'), die mit dem Behälter verbunden ist, um das im Behälter vorhandene Fluid unter Druck in den Speicher einzuspritzen,
- einen Dreiwege-Druckregler (4), der einen mechanischen Steuereingang zur Einstellung eines Sollwerts, einen mit dem Speicher (2) verbundenen Fluideingang, einen ersten Fluidausgang, der mit dem Fluidausgangsanschluss (18) der Absenkvorrichtung verbunden ist, und einen zweiten Fluidausgang, den sogenannte Ablauf, der mit dem Behälter (1) verbunden ist, umfasst,
- ein Element (5) zur manuellen Betätigung des mechanischen Steuereingangs des Druckreglers (4) durch einen Bediener,
- eine Verlängerung für die fluidische Verbindung des Fluidausgangsanschlusses (18) mit dem Löseanschluss der Sicherheitsbremse.

2. Absenkvorrichtung nach Anspruch 1, umfassend eine Sicherheitsstoppvorrichtung, eine sogenannte Totmann-Sicherheitsvorrichtung, umfassend einen Sicherheitshebel (7), der so ausgebildet ist, dass er von einem Bediener zwischen einer passiven Verriegelungsposition, die die Einspritzung von Fluid in die hydraulische Lösekammer der Bremse verhindert, und einer aktiven Entriegelungsposition, die die Einspritzung von Fluid in die hydraulische Lösekammer der Bremse ermöglicht, bewegt werden kann, wobei der Sicherheitshebel (7) automatisch in seine passive Verriegelungsposition zurückgestellt wird, wenn keine Aktion des Bedieners erfolgt.

3. Absenkvorrichtung nach einem der Ansprüche 1 oder 2, umfassend:
- einen ersten Drucksensor (8) zum Messen des Fluiddrucks am Eingang des Druckreglers (4) und ein erstes Anzeigemittel (8), das mit dem ersten Sensor zur Anzeige des gemessenen Drucks verbunden ist,
- einen zweiten Drucksensor (9) zum Messen des Fluiddrucks am Fluidausgangsanschluss der Absenkvorrichtung oder am Ausgang des Druckreglers und ein zweites Anzeigemittel (9), das mit dem zweiten Sensor zur Anzeige des gemessenen Drucks verbunden ist.

4. Absenkvorrichtung nach Anspruch 3, wobei der erste Drucksensor und das erste Anzeigemittel ein erstes Manometer (8) sind, das Drücke bis zu 250 bar messen kann, und der zweite Drucksensor und das zweite Anzeigemittel ein zweites Manometer (9) sind, das Drücke bis zu 150 bar messen kann.

5. Absenkvorrichtung nach einem der Ansprüche 1 bis 4, umfassend einen Fluidrücklaufkreis (30) zwischen dem Fluidausgangsanschluss (18) und dem Behälter (1) parallel zum Druckregler (4).

6. Absenkvorrichtung nach einem der Ansprüche 1 bis 5, umfassend einen beweglichen Wagen (31), an dem alle Komponenten der Absenkvorrichtung montiert sind.

7. Absenkvorrichtung nach einem der Ansprüche 1 bis 6, wobei die Pumpe ausgewählt ist aus: einer Kolbenpumpe (3), die manuell durch einen Hebel (10) aktiviert wird, einer Zahnrad-Rotationspumpe (3'), die mit einem Schraubendreher (11) verbunden ist.

8. Absenkvorrichtung nach einem der Ansprüche 1 bis 7, umfassend:
- einen Hauptbohrblock (13), an den der Behälter (1), die Pumpe (3) und ein Druckbeaufschlagungsschlauch (15) angeschlossen sind, der den Speicher (2) mit dem Hauptbohrblock verbindet, und
- einen sekundären Bohrblock (14), an den der Druckregler (4) angeschlossen ist, einen Versorgungsschlauch (16), der über den Hauptbohrblock (13) mit dem Speicher verbunden ist, einen Rücklaufschlauch (17), der über den Hauptbohrblock (13) mit dem Behälter (1) verbunden ist, und den Flüssigkeitsauslassanschluss (18) der Absenkvorrichtung.

9. Absenkvorrichtung nach einem der Ansprüche 1 bis 8, umfassend einen Druckbegrenzer (22) zwischen dem Druckspeicher (2) und dem Behälter (1), der so ausgebildet ist, dass er den in den Druckspeicher eingespritzten Fluiddruck begrenzt.

10. Absenkvorrichtung nach Anspruch 5, wobei der Rücklaufkreis (30) einen weiteren Druckbegrenzer (27) umfasst, der so ausgebildet ist, dass er den Fluiddruck begrenzt, der über den Fluidausgangsanschluss (18) in die hydraulische Lösekammer der Bremse eingespritzt wird.

11. Absenkvorrichtung nach einem der Ansprüche 1 bis 10, wobei die Totmannvorrichtung Folgendes umfasst:
- ein erstes Magnetventil (25) am Rücklaufkreis (30), wobei das erste Magnetventil so ausgebildet ist, dass es geöffnet ist, wenn sich der Sicherheitshebel (7) in der passiven Verriegelungsposition befindet, und dass es geschlossen ist, wenn sich der Sicherheitshebel in der aktiven Entriegelungsposition befindet, und
- ein zweites Magnetventil (23) am Eingang des Druckreglers (4), wobei das zweite Magnetventil so ausgebildet ist, dass es geschlossen ist, wenn sich der Sicherheitshebel (7) in der passiven Verriegelungsposition befindet, und dass es geöffnet ist, wenn sich der Sicherheitshebel in der aktiven Entriegelungsposition befindet.

12. Verfahren zum Absenken einer Last an einem Hebezeug, **dadurch gekennzeichnet, dass** es eine Absenkvorrichtung nach einem der vorhergehenden Ansprüche verwendet, und dadurch, dass es Folgendes umfasst:
- einen Schritt der Druckbeaufschlagung des Speichers (2), während dessen mindestens ein Teil des im Behälter (1) vorhandenen Fluids durch Aktivierung der Pumpe (3, 3') in den Speicher (2) eingespritzt wird,
- einen Schritt der Steuerung des Drucks am Ausgang des Druckreglers (4) mithilfe des Elements (5) zur manuellen Betätigung des Steuereingangs des Druckreglers, um das Absenken einer vom Hebezeug getragenen Last zu kontrollieren,
- wobei die Schritte der Druckbeaufschlagung und der Steuerung nacheinander und unabhängig voneinander ausgeführt werden.

## Claims

1. Hydraulic lowering device for a safety brake of a lifting machine, for use with a brake provided with a hydraulic release chamber and a fluid inlet connection, referred to as a release connection, the lowering device comprising:
- a fluid reservoir (1), and
- a fluid outlet port (18),
**characterised in that** it comprises:
- a pressurised fluid accumulator (2), connected to the fluid reservoir (1),
- a pump (3, 3') connected to the reservoir for injecting the fluid present in the reservoir under pressure into the accumulator,
- a three-way pressure regulator (4) comprising a mechanical control inlet for adjusting a setpoint value, a fluid inlet connected to the accumulator (2), a first fluid outlet connected to the fluid outlet port (18) of the lowering device, and a second, so-called drain, fluid outlet connected to the reservoir (1),
- a member (5) for manually actuating the mechanical control inlet of the pressure regulator (4) by an operator,
- an extension for the fluid communication of the fluid outlet port (18) with the release connection of the safety brake.

2. Lowering device according to claim 1, comprising a safety stop device, so-called dead man safety device, comprising a safety handle (7) configured to be able to be moved by an operator between a passive locking position that prohibits fluid injection into the brake hydraulic release chamber and an active unlocking position that authorises fluid injection into the brake hydraulic release chamber, the safety handle (7) being automatically returned to its passive locking position in the absence of action by the operator.

3. Lowering device according to any one of claims 1 or 2, comprising:
- a first pressure sensor (8) for measuring pressure of the fluid at the inlet of the pressure regulator (4) and a first display means (8) associated with said first sensor for displaying the pressure measured,
- a second pressure sensor (9) for measuring pressure of the fluid at the fluid outlet port of the lowering device or at the outlet of the pressure regulator and a second display means (9) associated with said second sensor for displaying the pressure measured.

4. Lowering device according to claim 3, wherein the first pressure sensor and the first display means are a first pressure gauge (8) capable of measuring pressures up to 250bar, and the second pressure sensor and the second display means are a second pressure gauge (9) capable of measuring pressures up to 150bar.

5. Lowering device according to any one of claims 1 to 4, comprising a fluid return circuit (30) between the fluid outlet port (18) and the reservoir (1) in parallel with the pressure regulator (4).

6. Lowering device according to any one of claims 1 to 5, comprising a movable carriage (31) on which all components of the lowering device are mounted.

7. Lowering device according to one of claims 1 to 6, the pump being chosen from: a piston pump (3) manually activated by a lever (10), a rotary gear pump (3') associated with a screwing machine (11).

8. Lowering device according to any one of claims 1 to 7, comprising:
- a main bored block (13) to which the reservoir (1), the pump (3), a pressurising hose (15) connecting the accumulator (2) to said primary bored block are connected, and
- a secondary bored block (14) to which the pressure regulator (4), a supply hose (16) connected to the accumulator via the main bored block (13), a return hose (17) connected to the reservoir (1) via the main bored block (13), and the fluid outlet port (18) of the lowering device are connected.

9. Lowering device according to any one of claims 1 to 8, comprising a pressure limiter (22) between the accumulator (2) and the reservoir (1), configured to limit the fluid pressure injected into the accumulator.

10. Lowering device according to claim 5, wherein the return circuit (30) comprises another pressure limiter (27) configured to limit the fluid pressure injected into the brake hydraulic release chamber via the fluid outlet port (18).

11. Lowering device according to any one of claims 1 to 10, wherein the dead man device comprises:
- a first solenoid valve (25) on the return circuit (30), which first solenoid valve is configured to be open when the safety handle (7) is in the passive locking position and to be closed when the safety handle is in the active unlocking position, and
- a second solenoid valve (23) at the inlet of the pressure regulator (4), which second solenoid valve is configured to be closed when the safety handle (7) is in the passive locking position and to be open when the safety handle is in the active unlocking position.

12. Method for lowering a load on a lifting device, **characterised in that** it uses a lowering device according to one of the preceding claims, and **in that** it comprises:
- a step of pressurising the accumulator (2) during which at least part of the fluid present in the reservoir (1) is injected into the accumulator (2) by activating the pump (3, 3'),
- a step of governing the pressure at the outlet of the pressure regulator (4) using the member (5) for manually actuating the control inlet of the pressure regulator so as to control lowering of a load carried by the lifting device,
- the pressurisation and governing steps being executed successively, independently of one another.
